# EUROPÄISCHE PATENTSCHRIFT

(11) **EP 1 328 747 B1**
(45) Veröffentlichungstag und Bekanntmachung des Hinweises auf die Patenterteilung: **17.08.2005**
(21) Anmeldenummer: 01988834.6
(22) Anmeldetag: 09.10.2001
(51) Int. Cl.: F16K 31/06, F16K 27/00

(54) **VERSCHLUSSVORRICHTUNG**
CLOSURE DEVICE
DISPOSITIF DE FERMETURE

(30) Priorität: 20.10.2000 DE 10051948; 20.01.2001 DE 10102593
(43) Veröffentlichungstag der Anmeldung: 23.07.2003
(73) Patentinhaber: Continental Teves AG & Co. oHG, 60488 Frankfurt (DE)
(72) Erfinder: ZUTT, Ulrich, 65527 Niedernhausen (DE); SCHUSTER, Thomas, 65623 Hahnstätten (DE); FORCHE, Marcus, 60433 Frankfurt am Main (DE); VOSS, Christoph, 60386 Frankfurt am Main (DE); HOLL, Frank, 56269 Marienhausen (DE); RICHTER, Andreas, 61267 Neu-Anspach (DE)
(86) Internationale Anmeldenummer: PCT/EP2001/011666
(87) Internationale Veröffentlichungsnummer: WO 2002/035125

(56) Entgegenhaltungen:
- DE-A- 19 922 334
- DE-A- 19 936 711
- DE-A- 19 951 665
- US-A- 5 333 836
- US-A- 6 084 493

## Beschreibung

Die Erfindung betrifft ein Verfahren zur Herstellung einer Verschlussvorrichtung, insbesondere zum Verschließen von druckmittelführenden Kanälen in einem Ventilaufnahmekörper, nach dem Oberbegriff des Anspruchs 1. Die Erfindung befasst sich darüber hinaus mit einem Verfahren zur Befestigung eines Verschlusskörpers in einem Gehäuse nach dem Oberbegriff des Anspruchs 5.

Aus der DE 42 21 988 A1 ist bereits eine Verschlussvorrichtung bekannt geworden, die aus einem in die Aufnahmebohrung eines Ventilträgers eingepressten Ventilgehäuse besteht. Das Ventilgehäuse übernimmt hierbei die Funktion eines Verstemmstempels, so dass es entsprechend massiv und hinsichtlich seiner Oberflächenkontur äußerst präzise hergestellt werden muss, um einerseits die auf den Ventilträger wirksame hohe Einpresskraft zu übertragen und andererseits die gewünschte Dichtheit nach Beendigung der Verstemmoperation in der Aufnahmebohrung sicherzustellen.

Gemäß der gattungsbildenden DE 199 22 334 A1 erfolgt der Verschluss eines druckmittelführenden Kanals in einem Gehäuse mittels eines hülsenförmigen Verschlusskörpers, der einen Bund aufweist, der in einer Stufenbohrung des Gehäuses zwischen einer ersten und zweiten Gehäusestufe fixiert ist. Diese Fixierung erfolgt kraftschlüssig, vorzugsweise durch eine trichterförmige Verstemmung des Werkstoffs am Ventilaufnahmekörper in Richtung des Bunds.

In der US-A-5 333 836 ist ein Elektromagnetventil beschrieben, dessen Ventilkörper innerhalb einer Aufnahmebohrung eines Gehäuses mittels einer primären Dichtverbindung sowie am Außenrand der Aufnahmebohrung mit einer sekundären Dichtverbindung versehen ist. Die primäre Dichtverbindung kommt in einem ersten Verfahrensschritt durch das Einpressen des Ventilkörpers in die Aufnahmebohrung zustande, indem der Ventilkörper in der Funktion eines Verstemmstempels das Gehäusematerial im Bereich der Aufnahmebohrung in seine Umfangsnut plastisch verdrängt. Hiervon unabhängig erfolgt mittels eines Presswerkzeugs in einem zweiten Verfahrensschritt zusätzlich die plastische Verformung des Außenrands an der Aufnahmebohrung in Richtung des Ventilkörpers, der hierzu an seinem Umfang abgesetzt ist.

Daher ist es die Aufgabe der vorliegenden Erfindung, ein Verfahren zur Herstellung einer Verschlussvorrichtung der eingangs genannten Art an zu geben, dass mittels einer einfachen und dennoch sicheren, flüssigkeitsdichten Verstemmoperation ein möglichst einfach aufgebauter Verschlusskörper in der Aufnahmebohrung eines Gehäuses befestigt werden kann.

Diese Aufgabe wird für eine Verschlussvorrichtung der eingangs genannten Art durch die Verfahrens- Merkmale der Patentansprüche 1 und 5 gelöst.

Weitere Merkmale, Vorteile und Anwendungsmöglichkeiten der Erfindung gehen im folgenden aus der Beschreibung eines Ausführungsbeispieles anhand mehrerer Zeichnungen hervor.

Es zeigen:
- Fig. 1: eine Verschlussvorrichtung mit einem in einem Gehäuse verstemmten, topfförmigen Verschlusskörper,
- Fig.2a - 2d: Einzelheiten zum Verstemmprozess des Verschlußkörpers mittels eines geeigneten Verstemmstempels in einer Aufnahmebohrung.

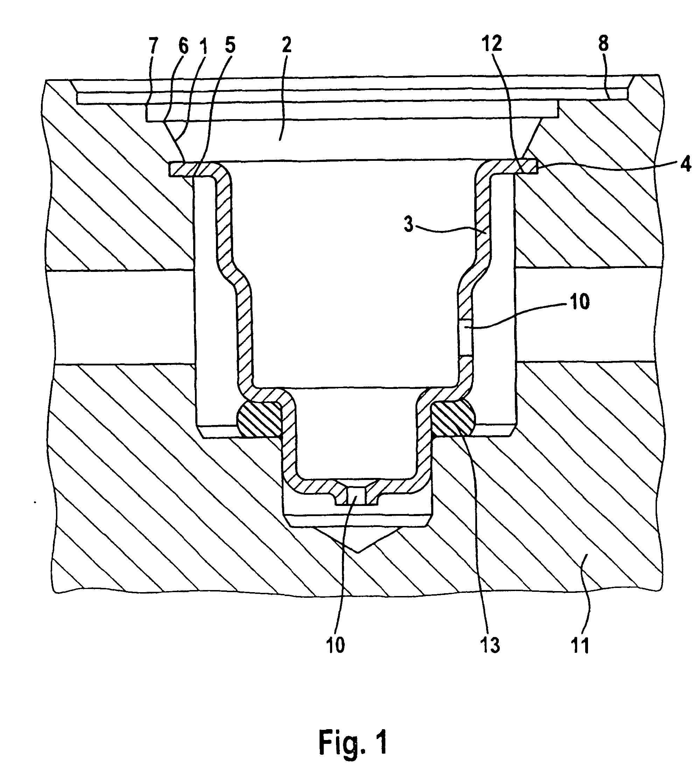

Die Fig. 1 zeigt in vergrößertem Maßstab im Längsschnitt eine Verschlussvorrichtung zum Verschließen von druckmittelführenden Kanälen in einem Ventilaufnahmekörper, bestehend aus einem rotationssymmetrischen Verschlusskörper 3, der in einer Aufnahmebohrung eines blockförmigen Gehäuses 11 befestigt ist. Der Umfang des Verschlusskörpers 3 weist einen Bund 4 auf, der an einer ersten Gehäusestufe 5 in der Aufnahmebohrung 2 anliegt. Das gegenüber dem Verschlusskörper 3 weichere Material des Gehäuses 11 ist in Richtung des Bunds 4 zu einer Verstemmung verdrängt, die den Verschlusskörper 3 im Gehäuse 11 flüssigkeitsdicht sowie unlösbar fixiert. Erfindungsgemäß ist vorgesehen, dass die Verstemmung als Verstemmkegel 1 ausgeführt ist, so dass die Aufnahmebohrung 2 in Richtung des Verschlusskörpers 3 eine trichterförmige Verengung aufweist, um den Umfang des Verschlusskörpers 3 im Bereich des Bunds 4 möglichst großflächig und zugleich hinsichtlich seiner mechanischen Spannung gut beherrschbar zu überdecken. Dem Verstemmkegel 1 schließt sich oberhalb des Verstemmkegels 1 eine gegenüber der ersten Gehäusestufe 5 erweiterte zweite Gehäusestufe 6 an, die durch die plastische Verformung des Gehäusematerials zur trichterförmigen Verengung der Aufnahmebohrung 2 gebildet ist. Die zweite Gehäusestufe 6 ist von einer dritten Gehäusestufe 7 begrenzt, deren quer zur Achse der Aufnahembohrung 2 verlaufende Stirnfläche einen Endanschlag 8 für einen Verstemmstempel 9 bildet. Der Verschlusskörper 3 liegt zur Aufnahme der Verstemmkraft an einer quer zur Bohrungsachse verlaufenden Reaktionsfläche 12 der ersten Gehäusestufe 5 an. Die Reaktionsfläche 12 ist vor dem Verstemmprozess in Richtung der Bohrungsachse um vorzugsweise 10 Grad geneigt. Dies hat den Vorteil, dass die Eloxalschicht des aus einer Leichtmetalllegierung bestehenden Gehäuses 11 geknackt werden kann, wobei trotz Flitterbildung des Eloxals eine saubere Dichtkante entsteht. Der rotationssymmetrische Verschlusskörper 3 ist zur Aufnahme von Bauteilen eines elektromagnetischen Ventilantriebs als Ventilhülse konzipiert, die am Umfang mit quer und am Boden mit längs verlaufenden Ventileinlass- und Ventilauslassöffnungen 10 versehen ist, die vorzugsweise durch Stanzen oder Prägen hergestellt sind. Der Verschlusskörper 3 lässt sich vorteilhaft aufgrund der gewählten erfindungsgemäßen Befestigung durch Tiefziehen von Dünnblech kostengünstig herstellen. Der zwischen dem Verschlusskörper 3 und dem Gehäuse 11 eingestemmte Bund 4 umgibt einen rechtwinklig zur Bohrungsachse abgekröpften Hülsenendabschnitt, so dass eine relativ einfache, kostengünstige Herstellung und Befestigung des Verschlusskörpers 3 im Gehäuse 11 gegeben ist.

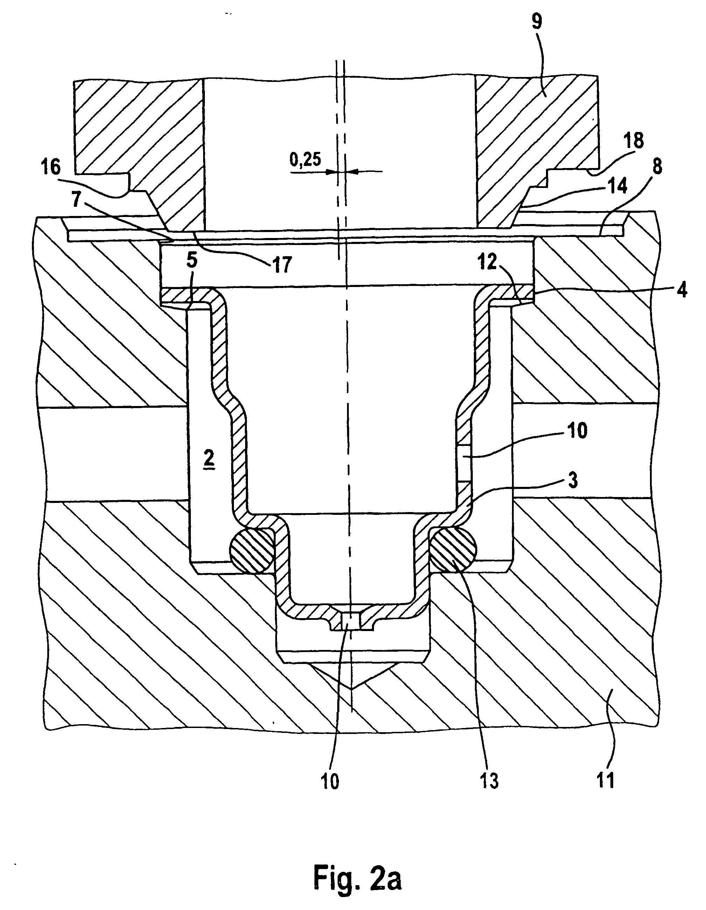

Nachfolgend werden anhand den Figuren 2a bis 2d die einzelnen Schritte des Verstemmverfahrens beschrieben.

Die Fig. 2a zeigt hierzu einen in der gestuften Aufnahmebohrung 2 eingesetzten topfförmigen Verschlusskörper 3, dessen mit einer Einlassöffnung 10 im Topfboden versehene Hülsenabschnitt an einem Absatz einen 0-Ring 13 aufnimmt, der zwischen einer Bohrungsstufe des Gehäuses 11 und dem Absatz des Verschlusskörpers 3 angeordnet ist. Der hiervon entfernt gelegene, rechtwinklig zur Bohrungsachse nach außen abgekröpfte Bund 4 stützt sich mit seinem Rand zunächst oberhalb der kegelförmig geneigten Reaktionsfläche 12 an dem im späteren Verstemmprozess in Richtung des Verstemmkegels 1 verformten Wandabschnitt des Gehäuses 11 ab. Folglich ist der Verschlusskörper 3 bereits nach dem automatengerechten Einsetzen in der Aufnahmebohrung 2 leicht zu zentrieren. Oberhalb der Aufnahmebohrung 2 befindet sich bereits der vom Werkzeugautomaten zugeführte Verstemmstempel 9, der sich aufgrund seiner Geometrie selbsttätig zur Aufnahmebohrung 2 zentriert.

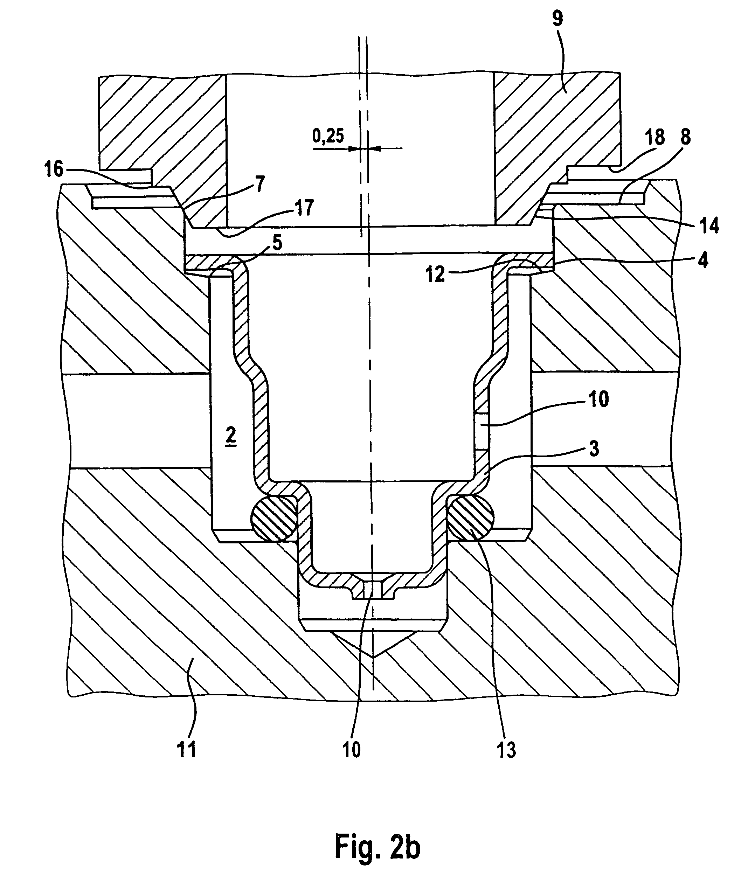

Entsprechend dem Ausführungsbeispiel weist der Verstemmstempel 9 zunächst bei der Zuführung durch den Werkzeugautomaten einen Achsenversatz von beispielhaften 0,25 mm gegenüber der Bohrungsachse auf. Dieser Ausrichtungsfehler wird gemäß der Fig. 2b durch den einseitigen Kontakt des Kegelabschnitts 14 an der dritten Gehäusestufe 7 beim Absenken des Verstemmstempels 9 selbsttätig ausgeglichen, so dass der Kegelabschnitt 14 für den weiteren Fertigungsprozess von besonderer Bedeutung ist.

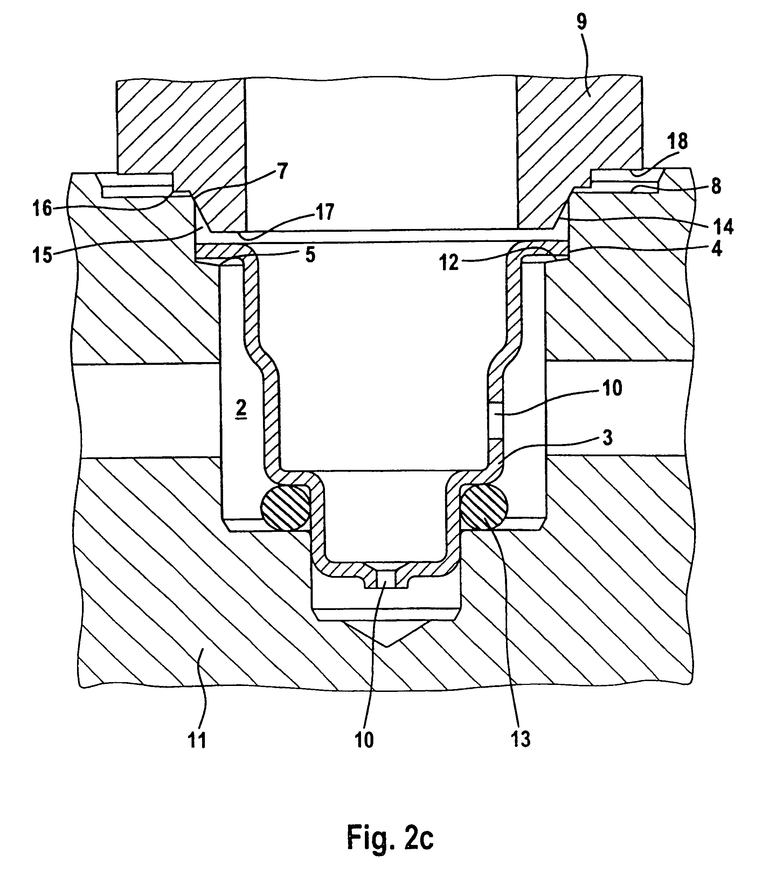

Die Fig. 2c zeigt diesbezüglich bereits die zentrische Ausrichtung des Verstemmstempels 9 an der dritten Gehäusestufe 7. Eine schwimmende bzw. radiale Verlagerbarkeit des Verstemmstempels 9 in einer geeigneten Werkzeugzuführung wird folglich vorausgesetzt. Durch die über den Kegelabschnitt 14 auf die Kante der dritten Gehäusestufe 7 aufgebrachte Verstemmkraft beginnt zunächst die plastische Verformung des Gehäusematerials in Richtung des zwischen dem Kegelabschnitt 14 und dem vertikalen Wandabschnitt des Gehäuses 11 gelegenen Freiraums 15 nur geringfügig, bis die sich an den Kegelabschnitt 14 anschließende Stempelstufe 16 an der Stirnfläche des Endanschlags 8 anlegt. Danach dringt unter kontinuierlicher Wirkung der Einpresskraft die Stempelstufe 16 entsprechend ihrem Tiefenmaß in die Stirnfläche des Endanschlags 8 vertikal ein, wobei das von ihr in Richtung des Verstemmkegels 1 verdrängte Gehäusevolumen wenigstens doppelt so groß ist, wie das Aufnahmevolumen des Freiraums 15. Hierdurch wird erreicht, dass nicht nur Werkstoffvolumen des Gehäuses 11 in den Freiraum 15 in Form eines Gehäusevorsprungs auf den Kegelabschnitt 14 verdrängt, sondern gleichzeitig in Richtung auf den Bund 4 des Verschlusskörpers 3 verdichtet wird. Es entsteht folglich eine im wesentlichen radiale Druckspannung in der Umformzone des Gehäuses 11 während der vertikalen Vorschubbewegung des Verstemmstempels 9. Bevor die Stempelstufe 16 ihre maximale Eintauchtiefe im Gehäuse 11 erreicht hat, drückt die Stempelstirnfläche 17 auf den Bund 4 des in der Aufnahmebohrung 2 eintauchenden Verschlusskörpers 3, wobei sich der Bund 4 in die schräge Reaktionsfläche 12 der ersten Gehäusestufe 5 eingepresst. Dies hat den Vorteil, dass die Eloxalschicht des Leichtmetallgehäuses 11 geknackt wird, so dass trotz Flitterbildung des Eloxals eine saubere Dichtkante am Bund 4 entsteht. Beim Eintauchen des Verschlusskörpers 3 in die Aufnahmebohrung 2 erhöht sich gleichzeitig die Einpresskraft auf den 0-Ring 13, was die Dichtwirkung des 0-Rings 13 begünstigt.

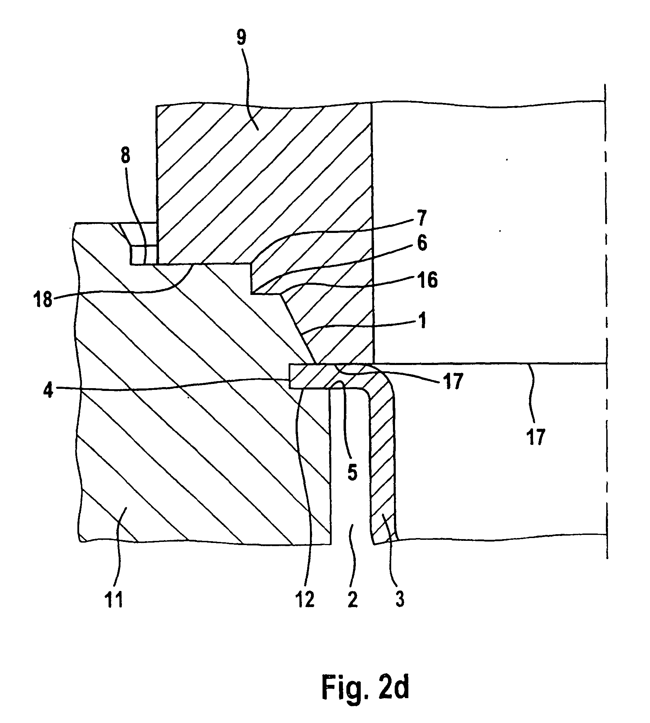

Die Fig. 2d zeigt die Endstellung des Verstemmstempels 9, in der sich die an der Stempelstufe 16 anschließende Anschlagfläche 18 auf dem Endanschlag 8 der Aufnahmebohrung 2 abstützt, so dass ein weiteres Absinken des Verschlusskörpers 3 in die Aufnahmebohrung 2 verhindert wird. Sobald der Verstemmstempel 9 aus der Aufnahmebohrung 2 zurückgezogen wird, kann der durch den Verstemmvorgang verdichtete Werkstoff des Gehäuses 11 gewissermaßen zurückfedern, da die radial wirkende Kraftkomponente des Verstemmstempels 9 aufgehoben ist. Hierdurch wirkt eine radial nach innen gerichtete Reaktionskraft auf den Bund 4 des Verschlusskörpers 3 ein, die die Abdichtung des Verschlusskörpers 3 im Bereich der Verstemmstelle begünstigt.

Aus der Fig. 2d wird ferner deutlich, dass erst durch die Verdrängerwirkung der Stempelstufe 16 die aus der Fig. 1 bereits bekannte zweite Gehäusestufe 6 entsteht, so dass sich die Vorbereitung der Aufnahmebohrung 2 ausschließlich auf die einfache Herstellung der ersten und dritten Gehäusestufe 5, 7 beschränkt.

Losgelöst von der bisher beschriebenen Verstemmoperation, lässt sich aus technischer Sicht der Verschlusskörper 3 in einem automatengerechten Fertigungsablauf innerhalb von Bruchteilen einer Sekunde in einem einzigen Arbeitsgang im Gehäuse 11 druckmitteldicht befestigen.

### Bezugszeichenliste

- 1: Verstemmkegel
- 2: Aufnahmebohrung
- 3: Verschlusskörper
- 4: Bund
- 5: Erste Gehäusestufe
- 6: Zweite Gehäusestufe
- 7: Dritte Gehäusestufe
- 8: Endanschlag
- 9: Verstemmstempel
- 10: Einlass- und Auslassöffnung
- 11: Gehäuse
- 12: Reaktionsfläche
- 13: O-Ring
- 14: Kegelabschnitt
- 15: Freiraum
- 16: Stempelstufe
- 17: Stempelstirnfläche
- 18: Anschlagfläche

## Patentansprüche

1. Verfahren zur Herstellung einer Verschlussvorrichtung, insbesondere zum Verschließen von druckmittelführenden Kanälen in einem Ventilaufnahmekörper mittels eines Verschlußkörpers, bestehend aus einem Gehäuse (11) und einem rotationssymmetrischen Verschlusskörper (3), der in einer Aufnahmebohrung (2) des Gehäuses (11) befestigt wird, mit einer am Umfang des Verschlusskörpers (3) vorgesehenen Verstemmstelle, mit welcher der Verschlusskörper (3) im Gehäuse (11) unlösbar fixiert wird, wobei die Verstemmstelle als Verstemmkegel (1) ausgeführt wird, so dass die Aufnahmebohrung (2) in Richtung des Verschlusskörpers (3) eine trichterförmige Verengung bildet, die den Umfang des Verschlusskörpers (3) im Bereich seines Bunds (4) überdeckt, wobei sich dem Verstemmkegel (1) am Gehäuse (11) eine gegenüber einer ersten Gehäusestufe (5) erweiterte zweite Gehäusestufe (6) anschließt, die durch die plastische Verformung des Gehäusematerials zur trichterförmigen Verengung der Aufnahmebohrung (2) ausgebildet wird und wobei der Verschlusskörper (3) zur Aufnahme der Verstemmkraft an einer quer zur Bohrungsachse verlaufenden Reaktionsfläche (12) der ersten Gehäusestufe (5) anliegt, **dadurch gekennzeichnet, dass** die Reaktionsfläche (12) in Richtung der Bohrungsachse zwischen 5 bis 15 Grad geneigt wird, und dass die zweite Gehäusestufe (6) von einer dritten Gehäusestufe (7) begrenzt wird, deren quer zur Achse der Aufnahmebohrung (2) verlaufende Stirnfläche einen Endanschlag (8) für einen Verstemmstempel (9) bildet.

2. Verfahren nach Anspruch 1, **dadurch gekennzeichnet, dass** der Verschlusskörper (3) als Ventilhülse zur Aufnahme von Bauteilen eines elektromagnetischen Ventiltriebs ausgebildet ist, der mit quer und längs verlaufenden Einlass- und Auslassöffnungen (10) versehen ist, die vorzugsweise durch Stanzen oder Prägen hergestellt sind.

3. Verfahren nach Anspruch 1 oder 2, **dadurch gekennzeichnet, dass** der Verschlusskörper (3) durch Tiefziehen von Dünnblech hergestellt ist.

4. Verfahren nach Anspruch 1, **dadurch gekennzeichnet, dass** die zwischen dem Verschlusskörper (3) und dem Gehäuse (11) gelegene Dichtfläche durch plastische Verformung des Gehäusematerials den rechtwinklig zur Bohrungsachse abgekröpften Bund (4) des Verschlusskörpers (3) umgibt.

5. Verfahren zur Befestigung eines rotationssymmetrischen Verschlusskörpers (3) in einem Gehäuse (11), der in einer Aufnahmebohrung (2) des Gehäuses (11) eingesetzt wird, mit einem am Umfang des Verschlusskörpers (3) vorgesehenen Bund (4), der an einer ersten Gehäusestufe (5) in der Aufnahmebohrung (2) anliegt, **gekennzeichnet durch** nachfolgende Verfahrensschritte:
Zentrieren eines Verstemmstempels (9) an einer entfernt zur ersten Gehäusestufe (5) gelegenen dritten Gehäusestufe (7) in der Aufnahmebohrung (2) mittels eines am Verstemmstempel (9) angebrachten Kegelabschnitts (14),
Verdrängen des Gehäusematerials der dritten Gehäusestufe (7) in Richtung auf einen am Umfang des Verschlusskörpers (3) vorgesehene Bund (4), wobei das vom Verstemmstempel (1) verdrängte Gehäusematerial wenigstens doppelt so groß ist wie das Aufnahmevolumen eines zwischen dem Kegelabschnitt (14) und dem vertikalen Wandabschnitt des Gehäuses (11) gelegenen Freiraums (15),
Verdrängen des Gehäusematerials im Bereich der Aufnahmebohrung (2) zu einer zweiten Gehäusestufe (6) mittels einer sich am Kegelabschnitt (14) anschließenden Stempelstufe (16),
Anlegen einer sich an die Stempelstufe (16) anschließenden Anschlagfläche (18) des Verstemmstempels (9) an einem Endanschlag (8) des Gehäuses (11) zur Beendigung der Vorschubbewegung des Verstemmstempels (9) in Richtung des Verschlusskörpers (3).

6. Verfahren nach Anspruch 5, **dadurch gekennzeichnet, dass** die Befestigung des Verschlusskörpers (3) im Gehäuse (11) mittels des Verstemmstempels (9) in einem einzigen Arbeitsgang erfolgt.

7. Verfahren nach Anspruch 5, **dadurch gekennzeichnet, dass** der Verstemmstempel (9) selbstzentrierend ausgeführt ist.

## Claims

1. Method of manufacturing a closure device, in particular for closing ducts in a valve-accommodating member by means of a closure member, in which ducts pressure medium is conveyed, comprising a housing (11) and a rotationally symmetric closure member (3) that is attached in an accommodating bore (2) of the housing (11), with a calked joint provided at the periphery of the closure member (3) and used to fix the closure member (3) in the housing (11) in a non-detachable manner, wherein the calked joint is configured as a calking cone (1) so that the accommodating bore (2) has a funnel-shaped contraction in the direction of the closure member (3), said contraction covering the periphery of the closure member (3) in the area of its collar (4), and succeeding the calking cone (1) on the housing (11) is a second housing step (6) that is expanded in relation to a first housing step (5), said step (6) being formed by the housing material deforming plastically to become the funnel-shaped contraction of the accommodating bore (2), and wherein the closure member (3) for accommodating the calking force abuts on a reaction surface (12) of the first housing step (5) that extends perpendicular to the bore axis,
**characterized in that** the reaction surface (12) is inclined by 5 to 15 degrees in the direction of the bore axis, and **in that** the second housing step (6) is bounded by a third housing step (7) whose end surface extending transversely to the axis of the accommodating bore (2) forms an end stop (8) for a calking punch (9).

2. Method as claimed in claim 1,
**characterized in that** the closure member (3) is configured as a valve sleeve for accommodating components of an electromagnetic valve drive, the said closure member including transversely and longitudinally extending inlet and outlet openings (10) which are preferably made by punching or embossing.

3. Method as claimed in claim 1 or 2,
**characterized in that** the closure member (3) is manufactured by deep-drawing thin sheets.

4. Method as claimed in claim 1,
**characterized in that** the sealing surface disposed between the closure member (3) and the housing (11) encompasses the collar (4) of the closure member (3) that is bent at right angles relative to the bore axis by way of plastic deformation of the housing material.

5. Method of attaching a rotationally symmetric closure member (3) in a housing (11) that is inserted into an accommodating bore (2) of the housing (11), with a collar (4) provided at the periphery of the closure member (3) and abutting on a first housing step (5) in the accommodating bore (2),
**characterized by** the following method steps:
centering a calking punch (9) at a third housing step (7) in the accommodating bore (2) disposed remote from the first housing step (5) by means of a conical portion (14) fitted at the calking punch (9),
displacing the housing material of the third housing step (7) in the direction of a collar (4) provided at the periphery of the closure member (3), with the housing material displaced by the calking punch (1) being at least twice as large as the absorptive volume of a free space (15) that is disposed between the conical portion (14) and the vertical wall portion of the housing (11),
displacing the housing material in the area of the accommodating bore (2) to a second housing step (6) by means of a punch step (16) adjoining the conical portion (14),
abutting of a stop surface (18) of the calking punch (9) that adjoins the punch step (16) on an end stop (8) of the housing (11) for terminating the feed movement of the calking punch (9) in the direction of the closure member (3).

6. Method as claimed in claim 5,
**characterized in that** the closure member (3) is attached in the housing (11) by means of the calking punch (9) in one single operation.

7. Method as claimed in claim 5,
**characterized in that** the calking punch (9) has a self-centering design.

## Revendications

1. Procédé de fabrication d'un obturateur, en particulier pour obturer des canaux conduisant un fluide sous pression dans un corps de réception de soupape au moyen d'un corps d'obturation, constitué d'un boîtier (11) et d'un corps d'obturation (3) à symétrie de révolution qui est fixé dans un perçage de réception (2) du boîtier (11), avec un emplacement de matage prévu sur le pourtour du corps d'obturation (3), par lequel le corps d'obturation (3) est fixé de manière inamovible dans le boîtier (11), l'emplacement de matage étant réalisé comme cône de matage (1), ce qui fait que le perçage de réception (2) forme, en direction du corps d'obturation (3), un rétrécissement en forme de cône qui recouvre le pourtour du corps d'obturation (3) dans la zone de son épaulement (4), au cône de matage (1) sur le boîtier (11) se raccordant un deuxième gradin de boîtier (6) élargi par rapport à un premier gradin de boîtier (5) et qui est réalisé par déformation plastique de la matière du boîtier pour donner le rétrécissement en forme de cône du perçage de réception (2), et le corps d'obturation (3) s'appliquant, pour absorber la force de matage, contre une surface de réaction (12), s'étendant transversalement à l'axe du perçage, du premier gradin du boîtier (5), **caractérisé en ce que** la surface de réaction (12) est inclinée en direction de l'axe du perçage suivant un angle compris entre 5 et 15°, et **en ce que** le deuxième gradin du boîtier (6) est limité par un troisième gradin du boîtier (7) dont la surface frontale, s'étendant transversalement à l'axe du perçage de réception (2), forme une butée terminale (8) pour un piston de matage (9).

2. Procédé selon la revendication 1, **caractérisé en ce que** le corps d'obturation (3) est réalisé comme douille de soupape pour recevoir des composants d'une commande de soupape électromagnétique, laquelle est pourvue d'orifices d'entrée et de sortie (10) s'étendant transversalement et longitudinalement et qui sont réalisés de préférence par estampage ou matriçage.

3. Procédé selon la revendication 1 ou 2, **caractérisé en ce que** le corps d'obturation (3) est réalisé par emboutissage profond d'une tôle mince.

4. Procédé selon la revendication 1, **caractérisé en ce que** la surface d'étanchéité, située entre le corps d'obturation (3) et le boîtier (11), entoure par déformation plastique de la matière du boîtier l'épaulement (4) coudé à angle droit par rapport à l'axe du perçage, du corps d'obturation (3).

5. Procédé de fixation d'un corps d'obturation (3) à symétrie de révolution dans un boîtier (11), qui est inséré dans un perçage de réception (2) du boîtier (11), avec un épaulement (4) prévu sur le pourtour du corps d'obturation (3), lequel s'applique contre un premier gradin du boîtier (5) dans le perçage de réception (2), **caractérisé par** les étapes de procédé suivantes :
centrage d'un piston de matage (9) sur un troisième gradin du boîtier (7) situé éloigné du premier gradin du boîtier (5), dans le perçage de réception (2), au moyen d'un tronçon de cône (14) placé sur le piston de matage (9),
refoulement de la matière du boîtier du troisième gradin du boîtier (7) en direction d'un épaulement (4) prévu sur le pourtour du corps d'obturation (3), la matière du boîtier, refoulée par le piston de matage (1), étant au moins égale au double du volume de réception d'un espace libre (15) situé entre le tronçon de cône (14) et le tronçon de paroi vertical du boîtier (11),
refoulement de la matière du boîtier dans la zone du perçage de réception (2) en un deuxième gradin du boîtier (6) au moyen d'un gradin de piston (16) se raccordant au tronçon de cône (14),
application d'une surface de butée (18), se raccordant au gradin de piston (16), du piston de matage (9), contre une butée terminale (8) du boîtier (11) pour terminer le mouvement d'avance du piston de matage (9) en direction du corps d'obturation (3).

6. Procédé selon la revendication 5, **caractérisé en ce que** la fixation du corps d'obturation (3) dans le boîtier (11) s'effectue au moyen du piston de matage (9) en une seule passe.

7. Procédé selon la revendication 5, **caractérisé en ce que** le piston de matage (9) est réalisé auto-centrant.
